# EUROPÄISCHE PATENTSCHRIFT

(11) **EP 0 471 271 B1**
(45) Veröffentlichungstag und Bekanntmachung des Hinweises auf die Patenterteilung: **13.03.1996**
(21) Anmeldenummer: 91113178.7
(22) Anmeldetag: 06.08.1991
(51) Int. Cl.: G01D 21/00

(54) **Verfahren zum Bestimmen eines Parameters eines strömenden Fluids**
Method for determinating a parameter of a streaming fluid
Procédé pour déterminer le paramètre d'un fluide en train de couler

(30) Priorität: 11.08.1990 DE 4025532
(43) Veröffentlichungstag der Anmeldung: 19.02.1992
(73) Patentinhaber: Mindermann, Kurt-Henry, Dipl.-Ing., D-40883 Ratingen (DE)
(72) Erfinder: Mindermann, Kurt-Henry, Dipl.-Ing., D-40883 Ratingen (DE)
(74) Vertreter: Sparing Röhl Henseler Patentanwälte

(56) Entgegenhaltungen:
- US-A- 4 257 278

## Beschreibung

Die Erfindung betrifft ein Verfahren zum Bestimmen eines Parameters eines strömenden Fluids im Querschnitt eines Strömungskanals.

Die Druckschrift US-A-4,257,278 befaßt sich mit der quantitativen Blutströmungsmengenmessung mittels Ultraschall und Doppler. Der gemessene Parameter ist die mittlere Fließgeschwindigkeit, aus der nach Multiplikation mit einem Gebietssignal die Strömungsrate des Volumens bestimmt wird. Die Zahl der aktiven Wandlerelemente für Senden und Empfangen wird variiert, um bei einer vorgegebenen Reichweite einen Strahlquerschnitt zu realisieren, der ungefähr gleich dem Gefäßquerschnitt ist.

Auch auf technischem Gebiet gibt es bestimmte Meßprobleme.

Beispielsweise besteht das Problem, die Temperaturverteilung im Querschnitt eines Rauchgaszuges einer Feuerungsanlage zu bestimmen, und zwar fortlaufend. Es wäre naheliegend, an den interessierenden Orten des Querschnitts Temperatursensoren anzuordnen und deren Ausgangssignale auszuwerten. Solche Sensoren würden jedoch innerhalb kürzester Frist verschmutzen und unbrauchbar werden oder zumindest falsche Meßwerte liefern.

Aufgabe der Erfindung ist es, für solche und ähnliche Fälle ein Verfahren anzugeben, wie gleichwohl die lokale Größe eines solchen Parameters bestimmt werden kann.

Die erfindungsgemäß vorgesehene Lösung dieser Aufgabe ist im Patentanspruch definiert.

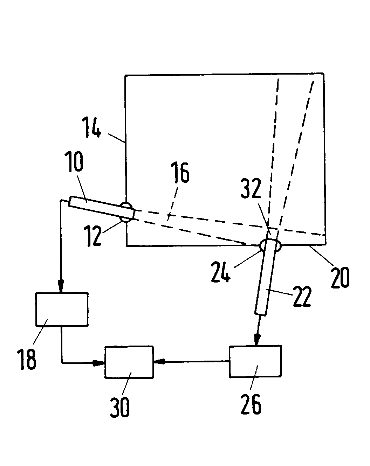

Anhand der beigefügten Zeichnung soll die Erfindung näher erläutert werden. Die Zeichnung stellt weitgehend schematisiert einen Strömungskanalquerschnitt mit den Sensoren und der Korrelationseinrichtung dar.

Als Beispiel sei angenommen, daß die Temperaturverteilung eines in dem Querschnitt strömenden Rauchgases zu bestimmen sei. Ein erstes Strahlungspyrometer 10 ist schwenkbeweglich um eine zur Zeichnungsfläche senkrechte Achse 12 in der Wandung 14 des Kanals montiert. Es erfaßt die Strahlung in einem engen Winkel, der bei 16 angedeutet ist, und wird inkremental durch einen Gesamtwinkel von etwa 90° geschwenkt. Nach jedem Schwenkschritt wird der gemessene Summenwert, nämlich die Intensität der aufgefangenen Strahlung im Sichtwinkel, in einem Speicher 18 abgespeichert.

In der Wandung 20 des Kanals ist ein zweites Strahlungspyrometer 22 angeordnet, das ebenfalls inkrementell durch einen Winkel von etwa 90° um eine Achse 24 schwenkbar ist. Die erfaßten Strahlungsintensitäten werden in einem Speicher 26 abgelegt.

Nach jedem Schwenkinkrement des Pyrometers 10 durchläuft das Pyrometer 22 seinen gesamten Schwenkbereich, so daß im Speicher 18 n Summenwerte gespeichert werden und im Speicher 26 n Summenwerte. Der Begriff "Summenwerte" besagt, daß die Strahlungsintensität aus dem gesamten Sichtwinkel erfaßt wird, wobei allerdings durch an sich bekannte Filtertechniken die Hintergrundstrahlung eliminiert wird.

Nach jedem Durchlauf des Pyrometers 10 durch den gesamten Schwenkwinkel werden die abgespeicherten Werte beider Speicher 18 und 26 abgerufen und in einem Rechner 30 korreliert. Die hierfür notwendigen Algrorithmen sind bekannt. Der Rechner liefert n Temperaturwerte entsprechend den Schnittpunkten der beiden Sichtstrahlen bei der Erfassung der Summenparameter; ein solcher Schnittpunkt ist in der Zeichnung bei 32 angedeutet.

## Patentansprüche

1. Verfahren zum Bestimmen eines Parameters eines strömenden Fluids im Querschnitt eines Strömungskanals, gekennzeichnet durch die Schritte:
- Abtasten des Querschnitts mittels eines ersten Sensors von einer ersten Stelle der Kanalbegrenzung aus und Abspeichern der so erhaltenen ersten Parameter-Summenwerte,
- Abtasten des Querschnitts mittels eines zweiten Sensors von einer zweiten, zur ersten versetzten Stelle der Kanalbegrenzung aus und Abspeichern der so erhaltenen zweiten Parameter-Summenwerte,
- Korrelieren der ersten abgespeicherten Summenwerte mit den zweiten abgespeicherten Summenwerten derart, daß Punktwerte für die Größe des Parameters an ausgewählten Orten des Querschnitts erhalten werden.

## Claims

1. Method for determining a parameter of a flowing fluid in a section of a flow channel, characterized by the steps:
- scanning of the section by means of a first sensor from a first site of the channel limitations and storing of first parameter sum values so obtained,
- scanning of the section by means of a second sensor from a second site, offset with respect to the first site, of the channel limitations and storing of second parameter sum values so obtained,
- correlating the first stored sum values with the second stored sum values such that punctual values of the parameter size are obtained at selected sites of the section.

## Revendications

1. Procédé pour déterminer un paramètre d'un fluide s'écoulant par la section transversale d'un conduit de passage, caractérisé par les étappes:
- balayer la section au moyen d'un premier détecteur à partir d'un premier endroit de la limitation du conduit, et mémoriser des premiers valeurs de somme ainsi obtenus
- balayer la section au moyen d'un deuxième détecteur à partir d'un deuxième endroit, décalé par rapport au premier, de la limitation du conduit, et mémoriser des deuxièmes valeurs de somme ainsi obtenus,
- correler les premiers valeursde somme mémorisés avec les deuxièmes valeurs de somme mémorisés telle que des valeurs ponctuelles pour la grandeur du paramètre soient obtenus pour des endroits élus de la section.
